# EUROPÄISCHE PATENTANMELDUNG

(11) **EP 4 810 415 A1**
(43) Veröffentlichungstag der Anmeldung: **23.09.2026**
(21) Anmeldenummer: 26164877.8
(22) Anmeldetag: 16.03.2026
(51) Int. Cl.: B65G 47/86, B65G 47/90, B67B 3/20

(54) **KLAMMEREINRICHTUNG ZUM HALTEN EINES BEHÄLTERS AN EINEM TRAGRING DES BEHÄLTERS**

(30) Priorität: 18.03.2025 DE 102025110484
(71) Anmelder: Krones AG, 93073 Neutraubling (DE)
(72) Erfinder: SCHOENFELDER, Markus, 93073 Neutraubling (DE)
(74) Vertreter: v. Bezold & Partner Patentanwälte - PartG mbB

(57) **Zusammenfassung**

Die Erfindung betrifft u.a. eine Klammereinrichtung (14) zum Halten eines Behälters an einem Tragring des Behälters für eine Behältertransport- und/oder Behälterbehandlungsvorrichtung (10). Die Klammereinrichtung (14) weist ein Klammerarmpaar (16, 18) mit zwei relativ zueinander bewegbaren, vorzugsweise schwenkbaren, Klammerarmen (16, 18) zum unterseitigen Abstützen des Tragrings des Behälters auf. Die Klammereinrichtung (14) weist ferner ein Zentrierelement (58) zum Zentrieren des Behälters auf. Das Zentrierelement (58) ist zwischen dem Klammerarmpaar (16, 18) angeordnet und weist eine Aufnahme (60) zum abschnittsweisen Aufnehmen und Abstützen des Tragrings auf.

## Beschreibung

### Technisches Gebiet

Die Erfindung betrifft eine Klammereinrichtung und eine Behälterbehandlungsvorrichtung mit einer Klammereinrichtung. Die Erfindung betrifft ferner ein zugehöriges Verfahren.

### Technischer Hintergrund

Die DE 10 2020 114 905 A1 betrifft eine Vorrichtung zum Halten eines Behälters in einer Behälterbehandlungsvorrichtung, umfassend zwei in einer Schwenkebene relativ zueinander schwenkbare Greifarme, welche jeweils einen Halteabschnitt zum Halten des zu haltenden Behälters aufweisen. Eine Hubstange ist derart mit den Greifarmen gekoppelt, dass durch ein Verschieben der Hubstange senkrecht zur Schwenkebene der Greifarme die Halteabschnitte relativ zueinander verschwenkbar sind. Die Greifarme sind jeweils um eine Schwenkachse, ausgebildet über eine mechanische Welle, schwenkbar an einer Halterung angeordnet.

Die DE 10 2022 122 939 A1 betrifft ebenfalls eine Vorrichtung zum Halten eines Behälters, die eine Montage und Demontage wesentlich vereinfachen kann.

Zum weiteren Stand der Technik wird auf die DE 20 2022 105 105 U1, DE 10 2008 055620 A1, DE 10 2008 029711 A1, DE 10 2019 128335 A1 US 2009/315281 A und CN 112728259 A hingewiesen.

Nachteilig an bekannten Behälterklammern kann sein, dass die Zentrierung des Behälters über eine genaue und aufwendige Einstellung der Klammerarme vorgenommen werden muss. Ferner muss bspw. eine Verschließvorrichtung aufwendig eingestellt werden, um das Schließen der Behälterklammer (rechtzeitiges und synchrones Schließen der Klammerarme erfordert heute großen Aufwand und Anspruch an die Technik) und das Verschliessen des Behälters so abläuft, dass der Behälter weder beim Übergeben noch beim Verschließen verloren geht, beschädigt wird oder der Verschluss nicht korrekt appliziert wird.

Der Erfindung liegt die Aufgabe zu Grunde, eine verbesserte Technik zum Halten von Behältern zu schaffen. Vorzugsweise soll die Technik eine einstellungsarme und besonders genaue Positionierung des gehaltenen Behälters ermöglichen, z. B. in Kombination mit einem Behandeln, bevorzugt Verschließen, des gehaltenen Behälters.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Klammereinrichtung, vorzugsweise Neckhandling-Klammereinrichtung, zum Halten eines Behälters (z. B. Flasche, z. B. PET-Flasche) an einem Tragring des Behälters für eine Behältertransport- und/oder Behälterbehandlungsvorrichtung. Die Klammereinrichtung weist ein Klammerarmpaar mit zwei relativ zueinander bewegbaren, vorzugsweise schwenkbaren, Klammerarmen zum unterseitigen Abstützen des Tragrings des Behälters auf. Die Klammereinrichtung weist ein Zentrierelement zum Zentrieren des Behälters auf, wobei das Zentrierelement zwischen dem Klammerarmpaar angeordnet ist und eine Aufnahme zum abschnittsweisen Aufnehmen und Abstützen des Tragrings aufweist.

Vorteilhaft kann die Klammereinrichtung eine Behälterzentrierung in ihrem Zentrum und eine einfache Übernahme des Behälters ermöglichen. Der Behälter kann einfach in die Aufnahme übergeben werden, ohne aus dem Zentrum zu stehen oder zu rutschen und ohne dass eine exakte Einstellung des Schließens der Klammerarme notwendig ist. Die Zentrierung kann vorteilhaft direkt am Tragring des Behälterhalses erfolgen. Der Tragring des Behälters ist bereits im Vorformling (Preform) exakt. Das bedeutet, dass die Behälterzentrierung am Tragring besonders sicher und zuverlässig ist. Hingegen ist der zylindrische Durchmesser des Behälters unter dem Tragring vom Durchmesser und Ausformung vom Flaschenblasprozess bestimmt und daher weniger präzise. Vorteilhaft kann mit dem Zentrierelement somit eine besonders genaue Positionierung des Behälters ermöglicht werden. So kann der Behälter bspw. für eine Behälterbehandlung, wie bei einem Verschließen des Behälters, mittels der Klammereinrichtung sicher zentriert unterhalb der Behandlungseinrichtung positioniert werden. Der Behälter muss für das Halten und die Zentrierung vorteilhaft nur seitlich und von unten am Tragring mittels der Klammereinrichtung kontaktiert werden. Vorteilhaft kann damit der Tragring oben frei bleiben, was eine große Flexibilität bezüglich der Konfiguration der zugeordneten Behandlungseinrichtung, z. B. Verschließerkopf, ermöglicht. Vorteilhaft kommt es somit bspw. beim Verschließen zu keiner Beeinträchtigung aufgrund der Tragringzentrierung.

Vorzugsweise kann das Zentrierelement mittig zwischen den zwei Klammerarmen angeordnet und/oder im Wesentlichen auf einer Höhe mit den zwei Klammerarmen angeordnet sein.

In einem Ausführungsbeispiel ist mindestens eines erfüllt von:
- das Zentrierelement ist unbewegbar an einem Trägerteil der Klammereinrichtung (z. B. zur Montage der Klammereinrichtung) befestigt, vorzugsweise von unten;
- das Zentrierelement ist unbewegbar zwischen dem Klammerarmpaar angeordnet; und
- das Zentrierelement und die Aufnahme sind zum zentrierten Positionieren des Behälters zwischen den zwei Klammerarmen ausgebildet und angeordnet.

Vorteilhaft kann damit eine robuste und zuverlässige Konstruktion gewährleistet werden, die wenig verschleißanfällig ist und eine sichere Zentrierung des Behälters ermöglicht.

In einem weiteren Ausführungsbeispiel ist mindestens eines erfüllt von:
- die Aufnahme ist ringsegmentförmig;
- die Aufnahme bildet einen gabelförmigen Abschnitt des Zentrierelements;
- die Aufnahme ist zum abschnittsweisen Umgreifen einer Außenmantelfläche des Tragrings geformt;
- die Aufnahme ist als eine Stufe oder ein Absatz an dem Zentrierelement gebildet;
- die Aufnahme ist stirnseitig an dem Zentrierelement angeordnet; und
- die Aufnahme ist an einer Oberseite des Zentrierelements angeordnet.

Vorteilhaft kann die Aufnahme somit einerseits auf einfache Weise ausgebildet werden und andererseits eine zuverlässige Aufnahme und Zentrierung des Tragrings bzw. des Behälters ermöglichen.

In einer Ausführungsform weist die Aufnahme eine, vorzugsweise ringsegmentförmige, Bodenfläche zum unterseitigen Abstützen des Tragrings und/oder eine, vorzugsweise ringsegmentförmige, Seitenwandfläche zum seitlichen Abstützen des Tragrings auf. Vorteilhaft kann die Aufnahme den Behälter mittels der Bodenfläche (mit-) tragen und mittels der Seitenwandfläche zentrieren.

In einer weiteren Ausführungsform ist mindestens eines erfüllt von:
- die Seitenwandfläche ist im Wesentlichen als ein Kegelstumpfmantelflächensegment geformt;
- die Seitenwandfläche ist auskragend (z. B. über die Bodenfläche) geformt; und
- die Seitenwandfläche und die Bodenfläche sind relativ zueinander zum Festklemmen des Tragrings zwischen der Bodenfläche und der Seitenwandfläche angewinkelt, z. B. in einem Winkel < 90°.

Vorteilhaft kann damit auf einfache Weise eine Drehmomentabstützung bzw. Verdrehsicherung des am Tragring gehaltenen Behälters ermöglicht werden, was bspw. besonders vorteilhaft bei einer (gleichzeitigen) Behandlung (z. B. Verschließen) des Behälters sein kann. Vorteilhaft können über eine Auskragung/Konusausprägung der Seitenwandfläche die notwendigen Gegenhaltkräfte am Tragring, z. B. zum Verschließen, erreicht werden. Der Behälter kann vorteilhaft von planaren Flächen (z. B. Kontaktflächen der Stützabschnitte und/oder stumpfen Halteteilen) der Klammerarme in die Seitenwandfläche gedrückt werden, um die Reibung signifikant zu erhöhen und um dem Verschließmoment entgegenzuwirken.

Vorteilhaft ist es dann bspw. nicht mehr notwendig, Eingreifelemente zum Einschneiden in den Behälter zum Verdrehsichern des Behälters zu nutzen. Ein großer Vorteil hierbei kann sein, dass der Behälter beim Verschließen nicht beschädigt wird. Vorteilhaft kann die Seitenwandfläche auch dafür sorgen, dass der Behälter nicht kippen kann und so eine perfekte Lage zum Behandeln, z. B. Verschließen, des Behälters einnimmt, sodass es kaum zu Behandlungsfehlern im Prozess kommen kann.

In einer Ausführungsvariante weisen die zwei Klammerarme jeweils einen, vorzugsweise gekrümmten und/oder hakenförmigen, Stützabschnitt zum (z. B. seitlichen und/oder unterseitigen) Abstützen des Tragrings auf.

In einer weiteren Ausführungsvariante ist mindestens eines erfüllt von:
- der Stützabschnitt des jeweiligen Klammerarms ist an einem freien Ende des jeweiligen Klammerarms angeordnet;
- die Stützabschnitte sind hin zu der Aufnahme gerichtet;
- die Stützabschnitte weisen jeweils eine oberseitige (z. B. im Wesentlichen rechteckförmige) Stützfläche zum unterseitigen Abstützen des Tragrings auf; und
- die Stützabschnitte weisen jeweils (z. B. stirnseitig) eine vertikal ausgerichtete (z. B. im Wesentlichen rechteckförmige) Kontaktfläche zum Kontaktieren eines Halsbereichs des Behälters direkt unterhalb des Tragrings zum Drücken des Tragrings in die Aufnahme des Zentrierelements auf.

Vorteilhaft können die Klammerarme somit einerseits den Behälter (mit-) tragen und andererseits bei der Zentrierung unterstützen.

In einem Ausführungsbeispiel ist mindestens eines erfüllt von:
- die Stützflächen sind auf einer Höhe mit einer Bodenfläche der Aufnahme des Zentrierelements angeordnet; und
- die Kontaktflächen sind hin zu der Aufnahme gerichtet.

Vorteilhaft kann somit ermöglicht werden, dass der Behälter an dem Tragring gemeinsam von den Stützflächen und der Bodenfläche getragen wird. Die Kontaktflächen können ermöglichen, dass die Klammerarme beim Zentrierung und ggf. Festklemmen unterstützen können.

In einem weiteren Ausführungsbeispiel weisen die zwei Klammerarme jeweils einen Klammerarmkörper und/oder (mindestens) ein Eingreifelement, vorzugsweise Schneidelement (z. B. Schneidplatte) oder Spike, auf, wobei die Eingreifelemente zum Eingreifen, vorzugsweise Einschneiden, in den Behälter (z. B. in einen Halsbereich direkt unterhalb des Tragrings) ausgebildet sind.

Vorteilhaft können die Eingreifelemente auf einfache Weise eine Drehmomentabstützung bzw. Verdrehsicherung des am Tragring gehaltenen Behälters ermöglichen, was bspw. besonders vorteilhaft bei einer (gleichzeitigen) Behandlung (z. B. Verschließen) des Behälters sein kann.

In einer Ausführungsform ist mindestens eines erfüllt von:
- das Eingreifelement des jeweiligen Klammerarms ist an oder in dem Klammerarmkörper des jeweiligen Klammerarms lösbar befestigt (z. B. mittels Schraubverbindung);
- die Eingreifelemente sind Gleichteile;
- die Eingreifelemente sind formschlüssig verdrehgesichert in einem Aufnahmeloch des Klammerarmkörpers des jeweiligen Klammerarms gehalten;
- die Eingreifelemente sind einander gegenüberliegend angeordnet;
- die Eingreifelemente sind jeweils mittels eines Dichtelements abgedichtet mit dem Klammerarmkörper verbunden;
- die Eingreifelemente sind auf einer Höhe unterhalb von einer Bodenfläche der Aufnahme des Zentrierelements zum Eingreifen in einen Halsbereich des Behälters direkt unterhalb des Tragrings angeordnet;
- die Eingreifelemente sind an einer Längsinnenseite des Klammerarmkörpers des jeweiligen Klammerarms angeordnet; und
- die Eingreifelemente sind beabstandet zu einem freien Ende des jeweiligen Klammerarms angeordnet.

Vorteilhaft kann auf diese Weise eine zuverlässige Funktionsweise der Eingreifelemente ermöglicht werden. Zusätzlich kann durch die Dichtelemente vorteilhaft eine besonders hygienische Konstruktion ermöglicht werden. Die Lösbarkeit der Eingreifelemente kann einen einfachen, schnellen und kostengünstigen Wechsel der Eingreifelemente ermöglichen, wenn dies bspw. verschleißbedingt erforderlich ist, ohne dass vorteilhaft die kompletten Klammerarme oder mehr gewechselt werden müssten. Die Anordnung der Eingreifelemente kann ermöglichen, dass Abdrücke, wie Kerben oder Schnittmarken, der Eingreifelemente nur direkt unterhalb des Tragrings entstehen, wo sie nicht oder kaum sichtbar sind und keinen Funktionsbereich, wie bspw. den Tragring selbst, des Behälters beeinträchtigen.

Ein weiterer Aspekt betrifft eine (z. B. Rundläufer-) Behälterbehandlungsvorrichtung, vorzugsweise (z. B. Rundläufer-) Behälterverschließvorrichtung zum Verschließen von Behältern (z. B. Flaschen, z. B. PET-Flaschen). Die Behälterbehandlungsvorrichtung weist mindestens eine Behandlungsstation, vorzugsweise Verschließstation, mit einer Behandlungseinrichtung, vorzugsweise einem Verschließerkopf, und einer Klammereinrichtung wie hierin offenbart auf. Vorzugsweise kann die Aufnahme des Zentrierelements zum zentrierten Positionieren des Behälters unterhalb von der Behandlungseinrichtung angeordnet sein.

Vorteilhaft können mit der Behälterbehandlungsvorrichtung die gleichen Vorteilteile erzielt werden, die bereits unter Bezugnahme auf die Klammereinrichtung erläutert wurden. Vorteilhaft wird durch das seitliche Greifen mittels der Klammerarme zusätzlich ermöglicht, dass die Klammereinrichtung mit einem Verschließerkopf, der ohne Kopfdruck verschließt, zusammenarbeiten kann.

Ein weiterer Aspekt der vorliegenden Offenbarung betrifft eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Klammereinrichtung wie hierin offenbart oder die Behälterbehandlungsvorrichtung wie hierin offenbart aufweisen. Die Behälterbehandlungsanlage kann beispielsweise eine Getränkeabfüllanlage sein.

Ein weiterer Aspekt betrifft ein Verfahren zum Betreiben einer Klammereinrichtung wie hierin offenbart oder einer Behälterbehandlungsvorrichtung wie hierin offenbart. Das Verfahren weist auf:
- Halten (und optional Tragen) eines Behälters (z. B. Flasche, z. B. PET-Flasche) an einem Tragring, vorzugsweise Halsring, des Behälters mittels der Klammereinrichtung, wobei die zwei Klammerarme den Tragring von unten abstützen und der Tragring abschnittsweise in der Aufnahme des Zentrierelements aufgenommen ist.

Vorteilhaft können mit dem Verfahren die gleichen Vorteile erzielt werden, die hierin bereits unter Bezugnahme auf die Klammereinrichtung und die Behälterbehandlungsvorrichtung erläutert wurden. Selbiges gilt für die untenstehend erläuterten bevorzugten Ausführungsbeispiele des Verfahrens.

In einem Ausführungsbeispiel weist das Verfahren ferner auf:
- Positionieren des Behälters zentriert zwischen den zwei Klammerarmen und/oder zentriert unterhalb von einer Behandlungseinrichtung, vorzugsweise Verschließerkopf zum Verschließen des Behälters, mittels Anlegen, vorzugsweise Andrücken (z. B. bewirkt durch die zwei Klammerarme), einer Außenmantelfläche des Tragrings an eine Seitenwandfläche der Aufnahme; und optional
- Behandeln, vorzugsweise Verschließen, des gehaltenen und positionierten Behälters mittels der Behandlungseinrichtung.

In einem weiteren Ausführungsbeispiel weist das Verfahren ferner auf: Verdrehsichern des gehaltenen Behälters mittels mindestens eines von
- Festklemmen des Tragrings zwischen einer Seitenwandfläche der Aufnahme und einer Bodenfläche der Aufnahme, vorzugsweise mit einer im Wesentlichen kegelstumpfmantelflächensegmentförmigen Seitenwandfläche der Aufnahme und/oder einer auskragend geformten Seitenwandfläche; und
- Eingreifen, vorzugsweise Einschneiden, in den Behälter mittels Eingreifelementen (z. B. Schneidelementen (z. B. Schneidplatten) oder Spikes) der zwei Klammerarme, vorzugsweise direkt unterhalb von dem Tragring.

In einem weiteren Ausführungsbeispiel weist das Verfahren ferner auf:
- Wechseln von lösbar an Klammerarmkörpern der zwei Klammerarme befestigten Eingreifelementen (z. B. Schneidelementen (z. B. Schneidplatten) oder Spikes) zum Eingreifen, vorzugsweise Einschneiden, in den Behälter zum Verdrehsichern des Behälters; und optional
- Abdichten zwischen den Eingreifelementen und den Klammerarmkörpern mittels mindestens eines Dichtelements.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Behältertransport- und/oder Behälterbehandlungsvorrichtung gemäß einem Ausführungsbeispiel;
- Figur 2: eine perspektivische Seitenansicht eines Abschnitts einer beispielhaften Behandlungsstation mit einer Klammereinrichtung gemäß einem Ausführungsbeispiel und einem rein schematisch dargestellten Verschließerkopf;
- Figur 3: eine perspektivische Ansicht von oben auf die beispielhafte Klammereinrichtung in einer Offenstellung;
- Figur 4: eine perspektivische Ansicht von oben auf die beispielhafte Klammereinrichtung in einer Schließstellung (Darstellung ohne Behälter);
- Figur 5: eine perspektivische Ansicht von unten auf die beispielhafte Klammereinrichtung;
- Figur 6: eine Schnittansicht durch die beispielhafte Klammereinrichtung;
- Figur 7: eine teilweise Explosionsdarstellung der beispielhaften Klammereinrichtung; und
- Figur 8: eine teilweise Explosionsdarstellung der beispielhaften Klammereinrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

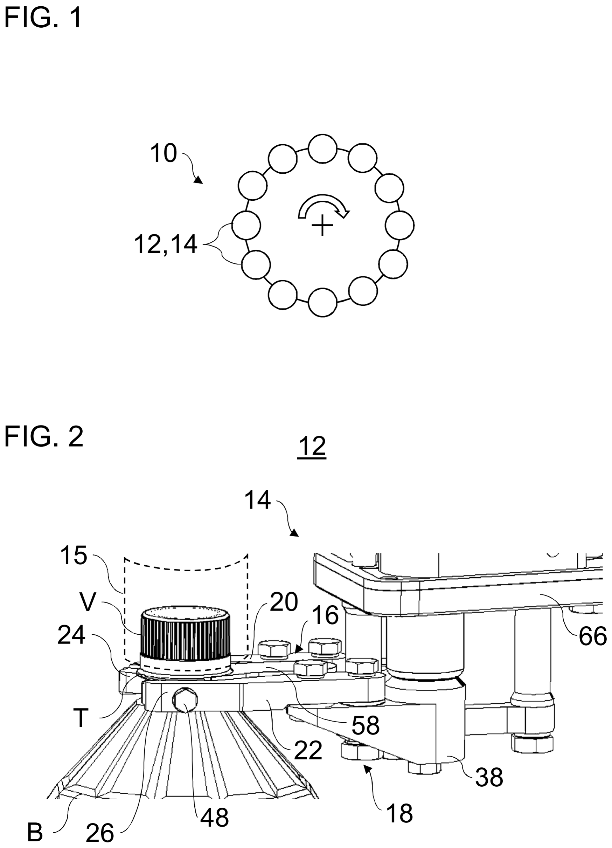

Die Figur 1 zeigt rein schematisch eine Behältertransport- und/oder Behälterbehandlungsvorrichtung 10. Die Vorrichtung 10 kann bevorzugt als eine Rundläufer-Vorrichtung bzw. in Karussellbauart oder als Linear-Vorrichtung ausgeführt sein.

Bevorzugt weist die Vorrichtung 10 mehrere Stationen 12 zum gleichzeitigen bzw. zeitlich überlappenden Handhaben und ggf. Behandeln mehrerer Behälter auf. Bevorzugt sind die Stationen 12 Behandlungsstationen, an/in denen die Behälter behandelt, z. B. verschlossen, werden. Die Stationen 12 können verteilt um einen Umfang der als Karussell bzw. Rundläufer ausgeführten Vorrichtung 10 herum angeordnet sein. Jede Station 12 kann eine Klammereinrichtung 14 aufweisen.

Besonders bevorzugt ist die Vorrichtung 10 eine Verschließvorrichtung zum Verschließen von Behältern, z. B. mit einem Deckel, einem Korken, einem Kronkorken oder einem Schraubverschluss. Beispielsweise kann die Verschließvorrichtung eine PET-Flaschen-Verschließvorrichtung sein. Die Verschließvorrichtung kann vorzugsweise als eine Rundläufer-Verschließvorrichtung ausgeführt sein. Die Verschließvorrichtung kann mehrere Verschließstationen zum gleichzeitigen bzw. zeitlich überlappenden Verschließen mehrerer Behälter aufweisen. Jede Verschließstation kann eine Klammereinrichtung 14 aufweisen. Bspw. können die Verschließstationen und deren Klammereinrichtungen 14 verteilt um einen Umfang der als Verschließerkarussell ausgeführten Verschließvorrichtung angeordnet sein. Die Verschließvorrichtung kann bezüglich eines Behälterstroms stromabwärts von einer Füllvorrichtung zum Füllen der Behälter mit einem bspw. flüssigen oder pastösen Füllgut angeordnet sein.

Die Figur 2 zeigt beispielhaft die Klammereinrichtung 14 und einen rein schematisch angedeuteten Verschließerkopf 15 als ein bevorzugtes Beispiel einer Behälterbehandlungseinrichtung einer (Behandlungs-) Station 12. Der Verschließerkopf 15 kann einen Behälterverschluss V auf den Behälter B applizieren, vorzugsweise aufschrauben, während der Behälter B von der Klammereinrichtung 14 gehalten ist.

Nachfolgend ist die beispielhafte Klammereinrichtung 14 unter Bezugnahme auf die Figuren 2 bis 8, die unterschiedliche Ansichten der beispielhaften Klammereinrichtung 14 zeigen, beschrieben.

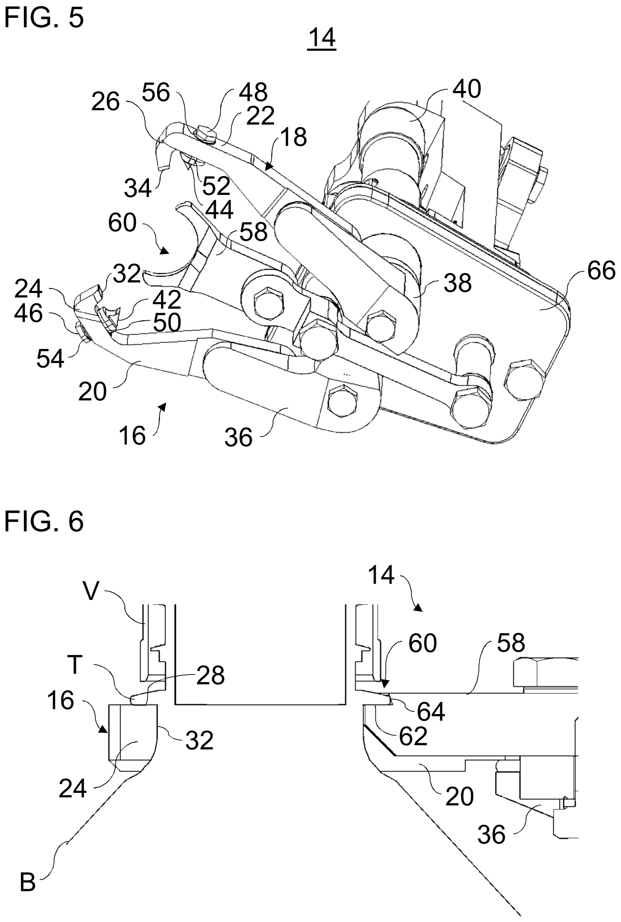

Die Klammereinrichtung 14 kann auch als Greifvorrichtung, vorzugsweise Seitengreifvorrichtung (engl. side gripper device), bezeichnet werden. Die Klammervorrichtung 14 ist zum Halten eines Behälters B (nur in den Figuren 2 und 6 dargestellt) ausgebildet. Die Klammereinrichtung 14 ist bevorzugt zum Halten des Behälters B im Bereich seines Tragrings T (nur in Figuren 2 und 6 dargestellt) ausgebildet. Bevorzugt ist der Tragring T im Halsbereich bzw. Neckbereich des Behälters B angeordnet. Die Klammereinrichtung 14 kann entsprechend auch als eine Neckhandling-Klammereinrichtung bezeichnet werden.

Die Klammereinrichtung 14 weist ein Klammerarmpaar 16, 18 und ein Zentrierelement 58 mit einer Aufnahme 60 auf.

Das Klammerarmpaar 16, 18 ist durch zwei Klammerarme 16 und 18 gebildet. Die Klammerarme 16, 18 können den Behälter B gemeinsam zwischen sich halten. Vorzugsweise können die Klammerarme 16, 18 den Tragring T des Behälters B von unten abstützen.

Die Klammerarme 16, 18 können auch als Greiferarme bezeichnet werden. Die Klammerarme 16, 18 können im Wesentlichen in einer gemeinsamen Horizontalebene ausgerichtet sein.

Die zwei Klammerarme 16 und 18 sind zum Halten und Freigeben eines Behälters B relativ zueinander bewegbar. Vorzugsweise sind die Klammerarme 16 und 18 gegensinnig zueinander bewegbar.

Bevorzugt sind die Klammerarme 16 und 18 schwenkbar. Vorzugsweise sind die Klammerarme 16 und 18 gegensinnig zueinander schwenkbar. Vorzugsweise sind die Klammerarme 16 und 18 um zueinander parallel beabstandete Schwenkachsen schwenkbar. Die Schwenkachsen können vorzugsweise vertikal verlaufen.

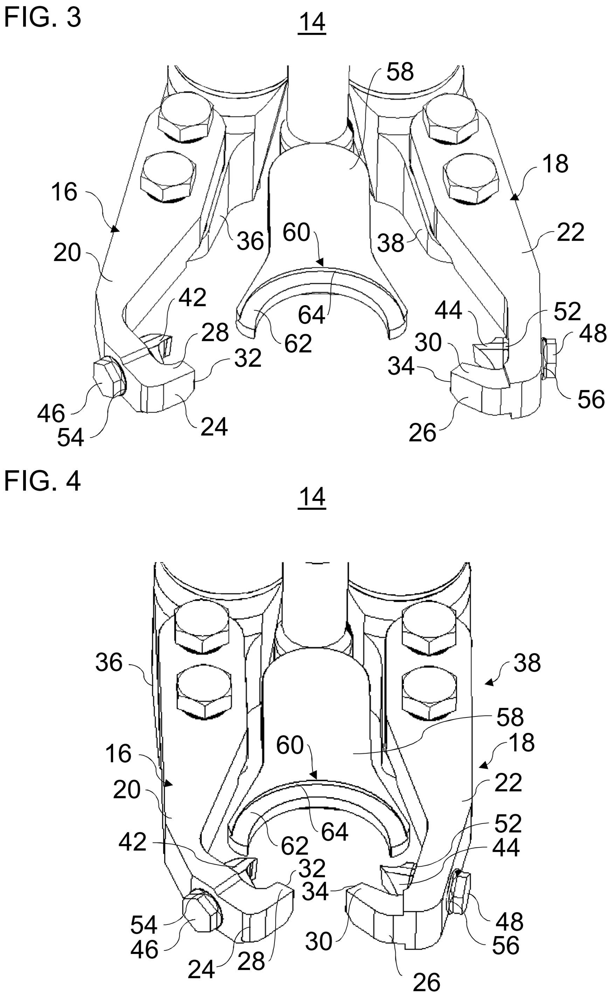

Vorzugsweise können die Klammerarme 16 und 18 zwischen einer Offenstellung / Freigabestellung (siehe Figur 3) und einer Schließstellung / Haltestellung (siehe Figur 4) bewegbar, bevorzugt schwenkbar, sein.

Die Klammerarme 16, 18 können einteilig oder - wie in den Figuren 2 bis 8 dargestellt - bevorzugt mehrteilig sein.

Beispielsweise können die Klammerarme 16, 18 jeweils einen Klammerarmkörper 20, 22 und bspw. einen Verbindungskörper 36, 38 aufweisen. Optional können die Klammerarme 16, 18 jeweils mindestens ein Eingreifelement 42, 44 aufweisen.

Mittels der Klammerarmkörper 20, 22 kann der Behälter B kontaktiert und gehalten werden, bevorzugt im Halsbereich des Behälters B, z. B. an dem Tragring T des Behälters B.

Im Einzelnen können die Klammerarmkörper 20, 22 bevorzugt jeweils einen Stützabschnitt 24, 26 zum Abstützen des Tragrings T aufweisen. Die Stützabschnitte 24, 26 können an einem freien Ende des jeweiligen Klammerarms 16, 18 angeordnet sein. Die Stützabschnitte 24, 26 können gekrümmt, vorzugsweise hakenförmig, sein. Bevorzugt kann die Krümmung nach innen gerichtet sein, z. B. hin zu dem Zentrierelement 58. Beispielsweise können die Stützabschnitte 24, 26 jeweils in einem Winkel ≥ 90° zu einem angrenzenden Abschnitt des jeweiligen Klammerarmkörpers 20, 22 gekrümmt sein. Die Stützabschnitte 24, 26 können hin zu der Aufnahme 60 des Zentrierelements 58 gerichtet sein.

Bevorzugt können die Stützabschnitte 24, 26 jeweils eine oberseitige Stützfläche 28, 30 aufweisen. Mittels der Stützflächen 28, 30 kann der Tragring T von unten abgestützt werden. Im Einzelnen kann eine Unterseite des Tragrings T auf den Stützflächen 28, 30 aufliegen, wenn ein Behälter B von der Klammereinrichtung 14 gehalten wird. Die Stützflächen 28, 30 können bspw. im Wesentlichen rechteckförmig sein. Die Stützflächen 28, 30 können bevorzugt horizontal ausgerichtet sein. Bevorzugt können die Stützflächen 28, 30 auf gleicher Höhe mit einer Bodenfläche 62 der Aufnahme 60 des Zentrierelements 58 angeordnet sein bzw. in einer gemeinsamen Horizontalebene mit der Bodenfläche 62 der Aufnahme 60 des Zentrierelements 58 liegen.

Vorzugsweise können die Stützabschnitte 24, 26 jeweils eine Kontaktfläche 32, 34 zum Kontaktieren eines Halsbereichs des Behälters B direkt unterhalb des Tragrings T aufweisen. Die Kontaktflächen 32, 34 können vorzugsweise stirnseitig an dem jeweiligen Stützabschnitt 24, 26 bzw. jeweiligen Klammerarmkörper 20, 22 angeordnet sein. Die Kontaktflächen 32, 34 können bspw. im Wesentlichen rechteckförmig sein. Die Kontaktflächen 32, 34 können bevorzugt vertikal ausgerichtet sein. Die Kontaktflächen 32, 34 können hin zu der Aufnahme 60 gerichtet sein.

Über die Kontaktflächen 32, 34 kann der Behälter B hin zu dem Zentrierelement 58 und dadurch der Tragring T abschnittsweise in die Aufnahme 60 des Zentrierelements 58 gedrückt werden.

Die Kontaktflächen 32, 34 können an die Stirnfläche 28, 30 des jeweiligen Stützabschnitts 24, 26 angrenzen. Bevorzugt kann ein Winkel zwischen der Kontaktfläche 32 bzw. 34 und der Stützfläche 28 bzw. 30 rund 90° betragen.

Die Klammerarmkörper 20, 22 können an dem Verbindungskörper 36, 38 des jeweiligen Klammerarms 16, 18 (z. B. lösbar) befestigt sein. Bevorzugt können die Klammerarmkörper 20, 22 mit dem jeweiligen Verbindungskörper 36, 38 verschraubt sein. Die Klammerarmkörper 20, 22 können auf einer Oberseite des jeweiligen Verbindungskörper 36, 38 aufliegen. Alternativ könnten der Klammerarmkörper 20 und der Verbindungskörper 36 bspw. integral einstückig ausgeführt sein, und der Klammerarmkörper 22 und der Verbindungskörper 38 könnten bspw. integral einstückig ausgeführt sein.

Die Verbindungskörper 36, 38 können die Klammerarmkörper 20, 22 mit einer jeweiligen Welle 40 verbinden (siehe Figur 5, in der eine der Wellen 40 beispielhaft sichtbar ist). Mittels der Wellen 40 können die Klammerarme 16, 18 schwenkbar sein. Eine Drehung der Wellen 40 kann ein Verschwenken der Klammerarme 16, 18 bewirken. Bevorzugt können Längssachsen der Welle 40 Schwenkachsen der Klammerarme 16, 18 sein. Die Schwenkachsen bzw. die Längsachsen können im Wesentlichen vertikal ausgerichtet sein. Die Wellen 40 können parallel zueinander verlaufen. Eine Drehung der Wellen 40 kann von einer Betätigungseinrichtung bewirkt sein. Die Betätigungseinrichtung kann auf jegliche Weise ausgeführt sein z. B. wie in der EP 4 335 784 A1 ausgeführt ist, die hierin durch Bezugnahme bezüglich der Ausbildung der Betätigungseinrichtung und der Aufhängung mitaufgenommen ist.

Der Verbindungskörper 36 kann den Klammerarmkörper 20 tragen. Der Verbindungskörper 38 kann den Klammerarmkörper 22 tragen. Die Verbindungskörper 36, 38 können an der jeweiligen Welle 40 befestigt sein, z. B. von unten. Beispielsweise können die Verbindungskörper 36, 38 mittels eines jeweiligen Befestigungselements (z. B. Schraube) an der jeweiligen Welle 40 befestigt, vorzugsweise verschraubt, sein (siehe Figur 5).

Die Eingreifelemente 42, 44 können in den Behälter B zum Sichern des Behälters B eingreifen. Die Eingreifelemente 42, 44 können zur Drehmomentabstützung bzw. zum Verdrehsichern des Behälters B dienen, z. B. wenn dieser behandelt, vorzugsweise verschlossen, wird.

Bevorzugt können die Eingreifelemente 42, 44 in einer Schließstellung der Klammereinrichtung 14 in den Behälter B eingreifen. Beispielsweise können die Eingreifelemente 42, 44 in den Behälter B einschneiden. Beispielsweise können die Eingreifelemente 42, 44 als Schneidelemente (z. B. mit einer oder mehreren Schneidkanten oder Schneidspitzen) oder als Spikes ausgebildet sein. Bevorzugt sind die Eingreifelemente 42 und 44 Gleichteile.

Auch möglich ist, dass die Eingreifelemente 42, 44 statt des Eingreifens in den Behälter B bspw. als stumpfe Halteteile ausgeführt sind.

Die Eingreifelemente 42, 44 können vorzugsweise auf einer Höhe unterhalb von einer Bodenfläche 62 der Aufnahme 60 des Zentrierelements 58 angeordnet sein. So können die Eingreifelemente 42, 44 in einen Halsbereich des Behälters B direkt unterhalb des Tragrings T eingreifen. Die Eingreifelemente 42, 44 sind bevorzugt einander gegenüberliegend angeordnet.

Vorzugsweise können die Eingreifelemente 42, 44 an einer Längsinnenseite des jeweiligen Klammerarms 16, 18 bzw. Klammerarmkörpers 20, 22 angeordnet sein. Bevorzugt können die Eingreifelemente 42, 44 beabstandet zu einem freien Ende des jeweiligen Klammerarms 16, 18 angeordnet. Beispielsweise können die Eingreifelement 42, 44 zurückversetzt zu und/oder neben dem Stützabschnitt 24, 26 des Klammerarmkörpers 20, 22 des jeweiligen Klammerarms 16, 18 angeordnet sein.

Vorzugsweise sind die Eingreifelemente 42, 44 an oder in dem Klammerarmkörper 20, 22 des jeweiligen Klammerarms 14, 16 lösbar befestigt, z. B. mittels einer Schraubverbindung. Entsprechend können die Eingreifelemente 42, 44 bspw. verschleißbedingt gewechselt werden.

Beispielsweise kann ein Befestigungselement 46 das Eingreifelement 42 an/in dem Klammerarmkörper 20 befestigen. Ein weiteres Befestigungselement 48 kann das weitere Eingreifelement 44 an/in dem weiteren Klammerarmkörper 22 befestigen. Die Befestigungselemente 46, 48 können bspw. direkt in die Eingreifelemente 42, 44 eingeschraubt werden. Die Befestigungselemente 46, 48 sind bevorzugt als Schrauben ausgeführt.

Die Schraubenköpfe der Befestigungselemente 46, 48 können an einer Längsaußenseite des jeweiligen Klammerarms 16, 18 bzw. Klammerarmkörpers 20, 22 angeordnet sein. Vorteilhaft kann so eine gute Zugänglichkeit zur Montage und Demontage der Eingreifelement 42, 44 ermöglicht werden.

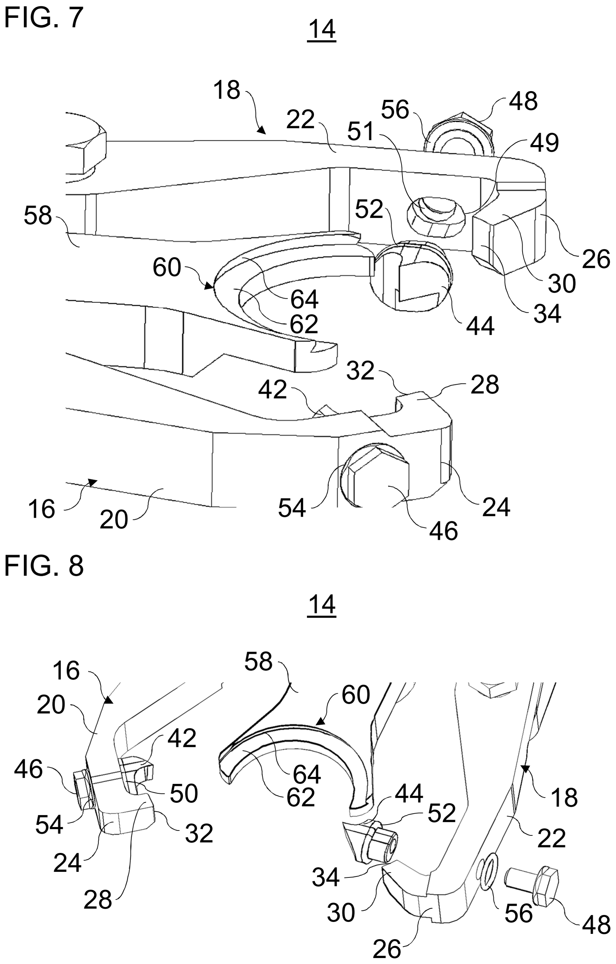

Bevorzugt können die Eingreifelemente 42, 44 formschlüssig verdrehgesichert in einem Aufnahmeloch 49 (siehe Figur 7) des Klammerarmkörpers 20, 22 des jeweiligen Klammerarms 16, 18 gehalten sein. Beispielsweise kann das Aufnahmeloch 49 einen Querschnitt aufweisen, der von einem Kreis abweicht, und das Eingreifelement 42, 44 kann einen in dem jeweiligen Aufnahmeloch 49 angeordneten Halteabschnitt aufweisen, der an den Querschnitt des Aufnahmelochs 49 angepasst ist, z. B. dem Querschnitt des jeweiligen Aufnahmelochs 49 entspricht. Beispielsweise kann das Aufnahmeloch 49 ein Langloch sein oder einen ovalen oder rechteckigen Querschnitt aufweisen.

Vorzugsweise kann ein Befestigungsloch 51 (siehe Figur 7) des Klammerarmkörpers 20, 22 des jeweiligen Klammerarms 16, 18 zum Einführen des jeweiligen Befestigungselements 46, 48 entfernt/außermittig zu einem Mittelpunkt einer Bodenfläche des Aufnahmelochs 49 des jeweiligen Klammerarmkörpers 20, 22 angeordnet sein. Alternativ oder zusätzlich kann ein jeweiliges Gewindeloch in den Eingreifelementen 42, 44 zum Einschrauben des jeweiligen Befestigungselements 46, 48 entfernt/außermittig zu einer Längsmittelachse des jeweiligen Eingreifelements 42, 44 angeordnet sein. Vorteilhaft können die Eingreifelemente 42, 44 somit nur in einer korrekten Ausrichtung mittels der Befestigungselemente 46, 48 und damit nicht falsch montiert werden.

Besonders bevorzugt sind die Eingreifelemente 42, 44 jeweils mittels eines Dichtelements 50, 52 abgedichtet mit dem Klammerarmkörper 20, 22 des jeweiligen Klammerarms 16, 18 verbunden. Die Dichtelemente 50, 52 können beispielsweise als O-Ringe ausgeführt sein. Die Dichtelemente 50, 52 können zwischen dem jeweiligen Eingreifelement 42, 44 und dem jeweiligen Klammerarmkörper 20, 22 angeordnet sein. Die Dichtelemente 50, 52 können ein Eindringen von Flüssigkeit, Keimen usw. in einen Spalt zwischen dem jeweiligen Eingreifelement 42, 44 und dem jeweiligen Klammerarmkörper 20, 22 verhindern und somit vorteilhaft die Hygiene verbessern.

Vorzugsweise können die Befestigungselement 46, 48 jeweils mittels eines Dichtelements 54, 56 abgedichtet mit dem Klammerarmkörper 20, 22 des jeweiligen Klammerarms 16, 18 verbunden sein. Die Dichtelemente 54, 56 können beispielsweise als O-Ringe ausgeführt sein. Die Dichtelemente 54, 56 können zwischen dem jeweiligen Befestigungselement 46, 48 (z. B. unterhalb eines jeweiligen Schraubenkopfes) und dem jeweiligen Klammerarmkörper 20, 22 angeordnet sein. Die Dichtelemente 54, 56 können ein Eindringen von Flüssigkeit, Keimen usw. in einen Spalt zwischen dem jeweiligen Befestigungselement 46, 48 und dem jeweiligen Klammerarmkörper 20, 22 verhindern und somit vorteilhaft die Hygiene verbessern.

Das Zentrierelement 58 ist zum Zentrieren des Behälters B ausgebildet und angeordnet. Im Einzelnen ist das Zentrierelement 58 zwischen dem Klammerarmpaar 16, 18 angeordnet, vorzugsweise unbewegbar.

Das Zentrierelement 58 weist die Aufnahme 60 auf. Die Aufnahme 60 ist dazu ausgebildet, den Tragring T abschnittsweise aufzunehmen und den Tragring T abzustützen. Das Zentrierelement 58 kann den mit seinem Tragring T in der Aufnahme 60 abschnittsweise positionierten Behälter B zentriert zwischen den Klammerarmen 16, 18 positionieren.

Die Aufnahme 60 kann eine Außenmantelfläche des Tragrings T des Behälters B umgreifen, z. B. bezüglich einer Horizontalebene oder einer Ausrichtungsebene des Zentrierelements 58 oder einer Ebene senkrecht zu einer Hochachse des Behälters B.

Vorzugsweise kann das Zentrierelement 58 den mit seinem Tragring T in der Aufnahme 60 abschnittsweise positionierten Behälter B zentriert unterhalb von der Behandlungseinrichtung, wie z. B. Verschließerkopf 15 (siehe Figur 2), positionieren. Beispielsweise kann die Behandlungseinrichtung / der Verschließerkopf 15 eine Mittelhochachse aufweisen, die mit einer Mittelhochachse des mittels des Zentrierelements 58 zentrierten Behälters B fluchten kann, bzw. die beiden Mittelhochachsen können identisch / kollinear sein.

Bevorzugt kann die Aufnahme 60 ringsegmentförmig sein. Die Aufnahme 60 kann einen gabelförmigen Abschnitt des Zentrierelements 58 bilden. Die Aufnahme 60 ist vorzugsweise stirnseitig an dem Zentrierelement 58 angeordnet. Bevorzugt kann die Aufnahme 60 an einer Oberseite des Zentrierelements 58 angeordnet sein.

Beispielsweise kann die Aufnahme 60 eine Bodenfläche 62 zum unterseitigen Abstützen des Tragrings T und eine Seitenwandfläche 64 zum seitlichen Abstützen des Tragrings T aufweisen. Die Bodenfläche 62 und die Seitenwandfläche 64 können zusammen eine Stufenform / Absatzform der Aufnahme 60 an dem Zentrierelement 58 bilden. Die Bodenfläche 62 kann bspw. ringsegmentförmig sein. Die Seitenwandfläche 64 kann bspw. ringsegmentförmig sein.

Zum zentrierten Positionieren des Behälters B zwischen den zwei Klammerarmen 16, 18 und optional zentriert unterhalb von einer Behandlungseinrichtung (z. B. Verschließerkopf 15 - siehe Figur 2) kann eine Außenmantelfläche des Tragrings T an die Seitenwandfläche 64 der Aufnahme 60 angedrückt werden. Das Andrücken kann bevorzugt mittels der Klammerarme 16 und 18, bevorzugt mittels der Stützabschnitte 24 und 26, besonders bevorzugt mittels der Kontaktflächen 32 und 34, bewirkt werden. Diese können vorzugweise gegen einen Behälterhalsabschnitt direkt unterhalb des Tragrings T drücken und damit die Außenmantelfläche des Tragrings T abschnittsweise an die Seitenwandfläche 64 drücken. Bevorzugt kann der so zentriert gehaltene Behälter B dann mittels der Behandlungseinrichtung behandelt, z. B. verschlossen, werden.

Bevorzugt ist, dass der Behälter B von der Klammereinrichtung 14 verdrehgesichert bzw. zum Abstützen eines Drehmoments gehalten wird. Beispielsweise kann das Verdrehsichern des Behälters B mittels der Eingreifelemente 42, 44 realisiert werden. Wie bereits erwähnt, können die Eingreifelemente 42, 44 in den Behälter B, vorzugsweise direkt unterhalb von dem Tragring T, eingreifen, vorzugsweise einschneiden.

Alternativ oder zusätzlich kann das Verdrehsichern bspw. durch ein Festklemmen des Tragrings T zwischen der Seitenwandfläche 64 und der Bodenfläche 62 der Aufnahme 60 realisiert werden. Beispielsweise kann die Seitenwandfläche 64 auskragend über die Bodenfläche 62 und/oder kegelstumpfmantelflächensegmentförmig sein, wie beispielhaft in Figur 6 dargestellt ist. Die Seitenwandfläche 64 und die Bodenfläche 62 können angewinkelt sein, z. B. in einem Winkel < 90°, z. B.≤ 85°, ≤ 80°, ≤ 75° oder ≤ 70°. Der Tragring T kann zwischen der Bodenfläche 62 und der Seitenwandfläche 64 eingeklemmt werden, wenn der Tragring T mittels der Klammerarme 16 und 18, bevorzugt mittels der Stützabschnitte 24 und 26, besonders bevorzugt mittels der Kontaktflächen 32 und 34, an die Seitenwandfläche 64 gedrückt wird.

Alternativ ist es jedoch bspw. auch möglich, dass die Seitenwandfläche 64 als eine Zylindermantelsegmentfläche geformt ist.

Vorzugsweise ist das Zentrierelement 58 unbewegbar an einem Trägerteil 66 der Klammereinrichtung 14 befestigt (siehe Figuren 2 und 5). Bevorzugt ist das Zentrierelement 58 lösbar und/oder von unten an dem Trägerteil 66 befestigt, z. B. mittels einer Schraubverbindung und/oder über einen Abstandhalter. Die Klammerarme 16, 18 und das Zentrierelement 58 können bevorzugt unterhalb von dem Trägerteil 66 angeordnet sein.

Das Trägerteil 66 kann bspw. zur Montage der Klammereinrichtung 14 ausgebildet sein. Das Trägerteil 66 ist bevorzugt plattenförmig. Vorzugsweise kann das Trägerteil 66 als eine Montageplatte ausgeführt sein. Das Trägerteil 66 kann die Klammereinrichtung 14 bevorzugt an einem bewegbaren Förderabschnitt (nicht dargestellt) anbringen, vorzugsweise mittels einer Schraubverbindung. Beispielsweise kann das Trägerteil 66 die Klammereinrichtung 14 an einem drehbaren Teil eines Behältertransportkarussells oder eines Behälterbehandlungskarussells, vorzugsweise Verschließerkarussells, anbringen. Bevorzugt kann das Trägerteil 66 von unten an dem bewegbaren Förderabschnitt, z. B. den drehbaren Teil, montiert werden. Das Trägerteil 66 kann mittels einer Überkopf-Montage an einem Träger der Behältertransport- und/oder Behälterbehandlungsvorrichtung 10 montiert werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Klammerarmpaares und/oder des Zentrierelements des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

**Bezugszeichenliste**

| | | | |
|---|---|---|---|
| 10 | Behältertransport- und/oder Behäl- terbehandlungsvorrichtung | 44 | weiteres Eingreifelement |
| | | 46 | Befestigungselement |
| 12 | Station | 48 | weiteres Befestigungselement |
| 14 | Klammereinrichtung | 49 | Aufnahmeloch |
| 15 | Verschließerkopf | 50 | Dichtelement |
| 16 | Klammerarm | 51 | Befestigungsloch |
| 18 | weiterer Klammerarm | 52 | weiteres Dichtelement |
| 20 | Klammerarmkörper | 54 | Dichtelement |
| 22 | weiterer Klammerarmkörper | 56 | Dichtelement |
| 24 | Stützabschnitt | 58 | Zentrierelement |
| 26 | weiterer Stützabschnitt | 60 | Aufnahme |
| 28 | Stützfläche | 62 | Bodenfläche |
| 30 | weitere Stützfläche | 64 | Seitenwandfläche |
| 32 | Kontaktfläche | 66 | Trägerteil |
| 34 | weitere Kontaktfläche | | |
| 36 | Verbindungskörper | B | Behälter |
| 38 | weiterer Verbindungskörper | T | Tragring |
| 40 | Welle | V | Behälterverschluss |
| 42 | Eingreifelement | | |

## Patentansprüche

1. Klammereinrichtung (14), vorzugsweise Neckhandling-Klammereinrichtung, zum Halten eines Behälters (B) an einem Tragring (T) des Behälters (B) für eine Behältertransport- und/oder Behälterbehandlungsvorrichtung (10), wobei die Klammereinrichtung (14) aufweist:
ein Klammerarmpaar (16, 18) mit zwei relativ zueinander bewegbaren, vorzugsweise schwenkbaren, Klammerarmen (16, 18) zum unterseitigen Abstützen des Tragrings (T) des Behälters (B); und
ein Zentrierelement (58) zum Zentrieren des Behälters (B), wobei das Zentrierelement (58) zwischen dem Klammerarmpaar (16, 18) angeordnet ist und eine Aufnahme (60) zum abschnittsweisen Aufnehmen und Abstützen des Tragrings (T) aufweist.

2. Klammereinrichtung (14) nach Anspruch 1, wobei mindestens eines erfüllt ist von:
das Zentrierelement (58) ist unbewegbar an einem Trägerteil (66) der Klammereinrichtung (14) befestigt, vorzugsweise von unten;
das Zentrierelement (58) ist unbewegbar zwischen dem Klammerarmpaar (16, 18) angeordnet; und
das Zentrierelement (58) und die Aufnahme (60) sind zum zentrierten Positionieren des Behälters (B) zwischen den zwei Klammerarmen (16, 18) ausgebildet und angeordnet.

3. Klammereinrichtung (14) nach Anspruch 1 oder Anspruch 2, wobei mindestens eines erfüllt ist von:
die Aufnahme (60) ist ringsegmentförmig;
die Aufnahme (60) bildet einen gabelförmigen Abschnitt des Zentrierelements (58);
die Aufnahme (60) ist zum abschnittsweisen Umgreifen einer Außenmantelfläche des Tragrings (T) geformt;
die Aufnahme (60) ist als eine Stufe oder ein Absatz an dem Zentrierelement (58) gebildet;
die Aufnahme (60) ist stirnseitig an dem Zentrierelement (58) angeordnet; und
die Aufnahme (60) ist an einer Oberseite des Zentrierelements (58) angeordnet.

4. Klammereinrichtung (14) nach einem der vorherigen Ansprüche, wobei:
die Aufnahme (60) eine, vorzugsweise ringsegmentförmige, Bodenfläche (62) zum unterseitigen Abstützen des Tragrings (T) und eine, vorzugsweise ringsegmentförmige, Seitenwandfläche (64) zum seitlichen Abstützen des Tragrings (T) aufweist.

5. Klammereinrichtung (14) nach Anspruch 4, wobei mindestens eines erfüllt ist von:
die Seitenwandfläche (64) ist im Wesentlichen als ein Kegelstumpfmantelflächensegment geformt;
die Seitenwandfläche (64) ist auskragend geformt; und
die Seitenwandfläche (64) und die Bodenfläche (62) sind relativ zueinander zum Festklemmen des Tragrings (T) zwischen der Bodenfläche (62) und der Seitenwandfläche (64) angewinkelt.

6. Klammereinrichtung (14) nach einem der vorherigen Ansprüche, wobei:
die zwei Klammerarme (16, 18) jeweils einen, vorzugsweise gekrümmten und/oder hakenförmigen, Stützabschnitt (24, 26) zum Abstützen des Tragrings (T) aufweisen.

7. Klammereinrichtung (14) nach Anspruch 6, wobei mindestens eines erfüllt ist von:
der Stützabschnitt (24, 26) des jeweiligen Klammerarms (16, 18) ist an einem freien Ende des jeweiligen Klammerarms (16, 18) angeordnet;
die Stützabschnitte (24, 26) sind hin zu der Aufnahme (60) gerichtet;
die Stützabschnitte (24, 26) weisen jeweils eine oberseitige Stützfläche (28, 30) zum unterseitigen Abstützen des Tragrings (T) auf; und
die Stützabschnitte (24, 26) weisen jeweils eine vertikal ausgerichtete Kontaktfläche (32, 34) zum Kontaktieren eines Halsbereichs des Behälters (B) direkt unterhalb des Tragrings (T) zum Drücken des Tragrings (T) in die Aufnahme (60) des Zentrierelements (58) auf.

8. Klammereinrichtung (14) nach Anspruch 7, wobei mindestens eines erfüllt ist von:
die Stützflächen (28, 30) sind auf einer Höhe mit einer Bodenfläche (62) der Aufnahme (60) des Zentrierelements (58) angeordnet; und
die Kontaktflächen (32, 34) sind hin zu der Aufnahme (60) gerichtet.

9. Klammereinrichtung (14) nach einem der vorherigen Ansprüche, wobei:
die zwei Klammerarme (16, 18) jeweils einen Klammerarmkörper (20, 22) und ein Eingreifelement (42, 44), vorzugsweise Schneidelement oder Spike, aufweisen, wobei die Eingreifelemente (42, 44) zum Eingreifen, vorzugsweise Einschneiden, in den Behälter ausgebildet sind.

10. Klammereinrichtung (14) nach Anspruch 9, wobei mindestens eines erfüllt ist von:
das Eingreifelement (42, 44) des jeweiligen Klammerarms (16, 18) ist an oder in dem Klammerarmkörper (20, 22) des jeweiligen Klammerarms (16, 18) lösbar befestigt;
die Eingreifelemente (42, 44) sind Gleichteile;
die Eingreifelemente (42, 44) sind formschlüssig verdrehgesichert in einem Aufnahmeloch (49) des Klammerarmkörpers (20, 22) des jeweiligen Klammerarms (16, 18) gehalten;
die Eingreifelemente (42, 44) sind einander gegenüberliegend angeordnet;
die Eingreifelemente (42, 44) sind jeweils mittels eines Dichtelements (50, 52) abgedichtet mit dem Klammerarmkörper (20, 22) verbunden;
die Eingreifelemente (42, 44) sind auf einer Höhe unterhalb von einer Bodenfläche (62) der Aufnahme (60) des Zentrierelements (58) zum Eingreifen in einen Halsbereich des Behälters (B) direkt unterhalb des Tragrings (T) angeordnet;
die Eingreifelemente (42, 44) sind an einer Längsinnenseite des Klammerarmkörpers (20, 22) des jeweiligen Klammerarms (16, 18) angeordnet; und
die Eingreifelemente (42, 44) sind beabstandet zu einem freien Ende des jeweiligen Klammerarms (16, 18) angeordnet.

11. Behälterbehandlungsvorrichtung (10), vorzugsweise Behälterverschließvorrichtung zum Verschließen von Behältern (B), wobei die Behälterbehandlungsvorrichtung (10) aufweist:
mindestens eine Behandlungsstation (12), vorzugsweise Verschließstation, mit einer Behandlungseinrichtung, vorzugsweise einem Verschließerkopf (15), und einer Klammereinrichtung (14) nach einem der vorherigen Ansprüche,
wobei vorzugsweise:
die Aufnahme (60) des Zentrierelements (58) zum zentrierten Positionieren des Behälters (B) unterhalb von der Behandlungseinrichtung angeordnet ist.

12. Verfahren zum Betreiben einer Klammereinrichtung (14) nach einem der Ansprüche 1 bis 10 oder einer Behälterbehandlungsvorrichtung (10) nach Anspruch 11, wobei das Verfahren aufweist:
Halten eines Behälters (B) an einem Tragring (T), vorzugsweise Halsring, des Behälters (B) mittels der Klammereinrichtung (14), wobei die zwei Klammerarme (16, 18) den Tragring (T) von unten abstützen und der Tragring (T) abschnittsweise in der Aufnahme (60) des Zentrierelements (58) aufgenommen ist.

13. Verfahren nach Anspruch 12, ferner aufweisend:
Positionieren des Behälters (B) zentriert zwischen den zwei Klammerarmen (16, 18) und/oder zentriert unterhalb von einer Behandlungseinrichtung, vorzugsweise Verschließerkopf (15) zum Verschließen des Behälters (B), mittels Anlegen, vorzugsweise Andrücken, einer Außenmantelfläche des Tragrings (T) an eine Seitenwandfläche (64) der Aufnahme (60); und optional
Behandeln, vorzugsweise Verschließen, des gehaltenen und positionierten Behälters (B) mittels der Behandlungseinrichtung.

14. Verfahren nach Anspruch 12 oder Anspruch 13, ferner aufweisend:
Verdrehsichern des gehaltenen Behälters (B) mittels mindestens eines von:
- Festklemmen des Tragrings (T) zwischen einer Seitenwandfläche (64) der Aufnahme (60) und einer Bodenfläche (62) der Aufnahme (60), vorzugsweise mit einer im Wesentlichen kegelstumpfmantelflächensegmentförmigen Seitenwandfläche (64) der Aufnahme (60) und/oder einer auskragend geformten Seitenwandfläche (64); und
- Eingreifen, vorzugsweise Einschneiden, in den Behälter (B) mittels Eingreifelementen (42, 44) der zwei Klammerarme (16, 18), vorzugsweise direkt unterhalb von dem Tragring (T).

15. Verfahren nach Anspruch 12 oder Anspruch 13, ferner aufweisend:
Wechseln von lösbar an Klammerarmkörpern (20, 22) der zwei Klammerarme (16, 18) befestigten Eingreifelementen (42, 44) zum Eingreifen, vorzugsweise Einschneiden, in den Behälter (B) zum Verdrehsichern des Behälters (B); und optional
Abdichten zwischen den Eingreifelementen (42, 44) und den Klammerarmkörpern (20, 22) mittels mindestens eines Dichtelements (50, 52).
